# EUROPEAN PATENT SPECIFICATION

(11) **EP 3 563 373 B1**
(45) Date of publication and mention of the grant of the patent: **30.11.2022**
(21) Application number: 17891423.0
(22) Date of filing: 29.12.2017
(51) Int. Cl.: G10L 15/08, G10L 15/00, G10L 15/02, G10L 15/25, G10L 15/22

(54) **VOICE RECOGNITION SYSTEM**
SPRACHERKENNUNGSSYSTEM
SYSTÈME DE RECONNAISSANCE VOCALE

(30) Priority: 30.12.2016 US 201662440893 P
(43) Date of publication of application: 06.11.2019
(73) Proprietor: Harman International Industries, Incorporated, Stamford, CT 06901 (US)
(72) Inventor: RAO, Rashmi, West Bloomfield, Michigan 48324 (US); ENTSMINGER, Kyle, Canton, MI 48188 (US); FORSMAN, Aaron, Canton, MI 48187 (US)
(74) Representative: Westphal, Mussgnug & Partner, Patentanwälte mbB
(86) International application number: PCT/US2017/068856
(87) International publication number: WO 2018/132273

(56) References cited:
- US-A1- 2004 186 718
- US-A1- 2010 204 907
- US-A1- 2011 071 030
- US-A1- 2013 304 479
- US-A1- 2013 307 771
- US-A1- 2014 136 187
- US-A1- 2014 136 187
- US-A1- 2015 234 459
- US-A1- 2016 070 344
- US-A1- 2016 070 344

## Description

### TECHNICAL FIELD

One or more embodiments relate to a voice recognition system for monitoring a user and modifying speech translation based on the user's movement and appearance.

### BACKGROUND

An example of a voice recognition system for controlling cellphone functionality is the "S Voice" system by Samsung. An example of a voice recognition system for controlling portable speaker functionality is the "JBL CONNECT" application by JBL^{®}.

Document US 2013/307771 A1 discloses to use user gaze information to select a context and interaction set for the user. The interaction sets may include grammars for a speech recognition system, movements for a gesture recognition system, physiological states for a user health parameter detection system, or other possible inputs. When a user focuses on a selected object or area, an interaction set associated with that object or area is activated and used to interpret user inputs. Interaction sets may also be selected based upon areas that a user is not viewing. Multiple devices can share gaze information so that a device does not require its own gaze detector.

Document US 2016/070344 A1 discloses a system for presenting actual data on a display device based on eye-tracking data. An eye-tracking engine receives sensed data from an eye-tracking device, determines a movement status of an eye based on the sensed data, and determines a display configuration based on the determined movement status. The display configuration is output on the display device and includes masking data when the determined movement status indicates the eye is in motion.

### SUMMARY

A voice recognition system can be provided with a user interface to display content, a camera to provide a signal indicative of an image of a user viewing the content and a microphone to provide a signal indicative of a voice command. The voice recognition system can be further provided with a controller that communicates with the user interface, the camera and the microphone and is configured to filter the voice command based on the image.

In an embodiment, a voice recognition system is provided with a user interface to display content, a camera to provide a first signal indicative of an image of a user viewing the content, and a microphone to provide a second signal indicative of a voice command that corresponds to a requested action. The voice recognition system is further provided with a controller that is programmed to receive the first signal and the second signal, filter the voice command based on the image, and perform the requested action based on the filtered voice command. The controller is further programmed to perform a macro including a series of actions in response to an eye gaze of the user detected to focus on a region of the user interface for a time period that exceeds a predetermined period of time, and the voice command corresponding to a predetermined voice command that is associated with the content displayed on the region of the user interface.

In another embodiment, a computer-program product embodied in a non-transitory computer readable medium that is programed for controlling a voice recognition system is provided. The computer-program product includes instructions for: receiving a voice command that corresponds to a requested action; receiving a visual command indicative of the user viewing content on a user interface; filtering the voice command based on the visual command; and performing the requested action based on the filtered voice command.

In another embodiment, a method for controlling a voice recognition system is provided. A first signal is received that is indicative of a voice command that corresponds to a requested action. A second signal is received that is indicative of an image of a user viewing content on a user interface. The voice command is filtered based on the image, and the requested action is performed based on the filtered voice command.

As such the voice recognition system improves the accuracy of the translation of a voice command by combining the voice command with eye gaze tracking and/or facial recognition to narrow down the search field and limit the speech to text translation to the item that the user is interested in.

### BRIEF DESCRIPTION OF THE DRAWINGS

Figure 1 is a schematic view of a user interacting with a media device including a voice recognition system, according to one or more embodiments.
Figure 2 is a front elevation view of the media device of Figure 1, illustrating audio system controls.
Figure 3 is another front elevation view of the media device of Figure 1, illustrating climate system controls.
Figure 4 is another front elevation view of the media device of Figure 1, illustrating climate system controls.
Figure 5 is another front elevation view of the media device of Figure 1, illustrating communication system controls.
Figure 6 is a schematic view of a media network with a plurality of devices, including the media device of Fig. 1, illustrated communicating with each other using a cloud based network, according to one or more embodiments.
Figure 7 is another front elevation view of the media device of Figure 1, illustrating a gaze-enabled macro.
Figure 8 is a flow chart illustrating a method for controlling the voice recognition system, according to one or more embodiments.

### DETAILED DESCRIPTION

The invention is defined in the appended claims. Dependent claims are directed to some beneficial embodiments.

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

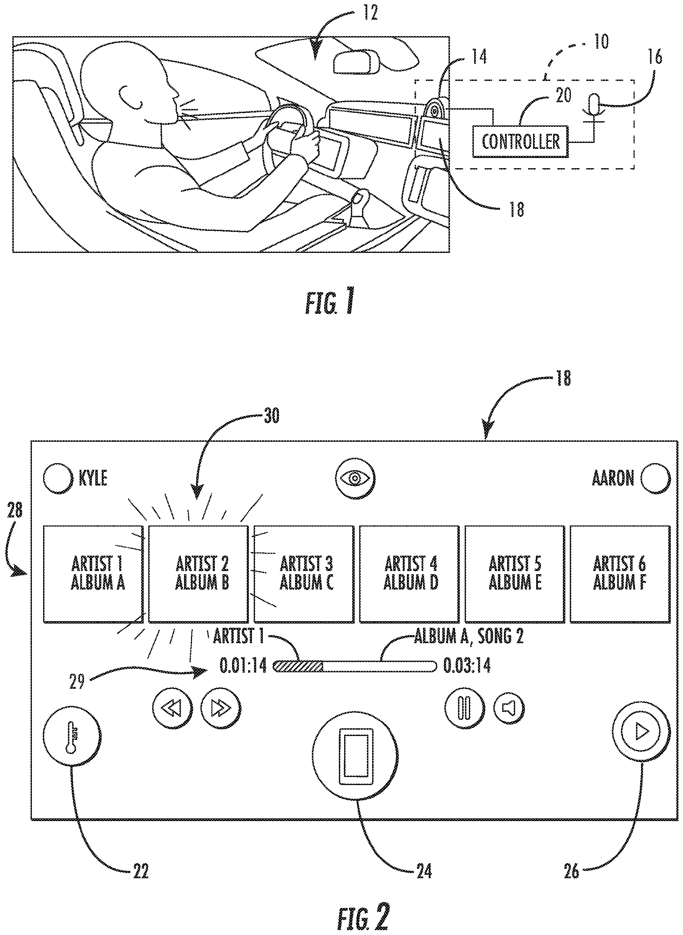

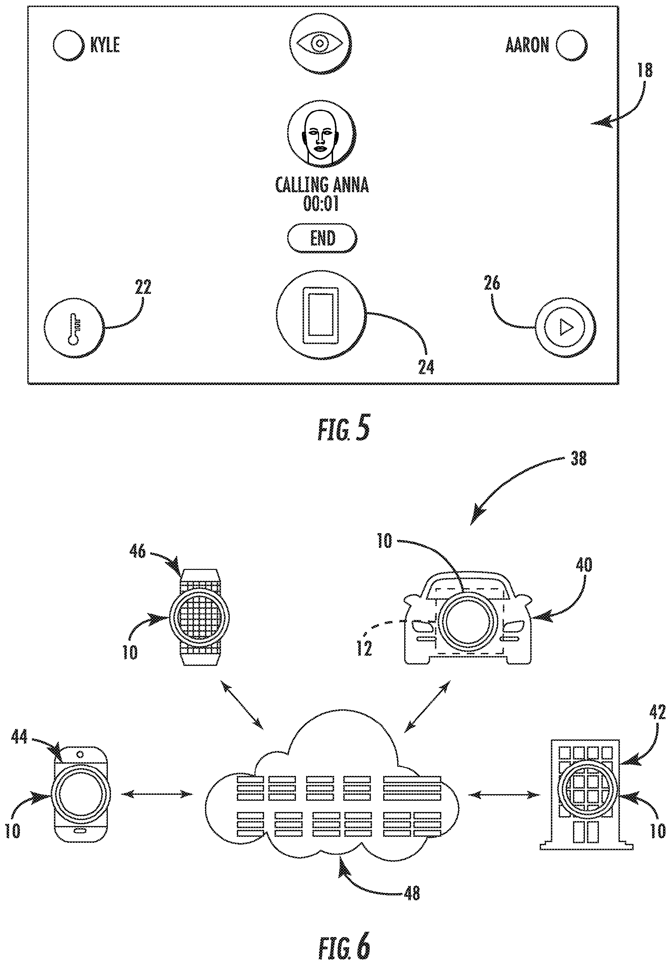

With reference to Figure 1, a voice recognition system is illustrated in accordance with one or more embodiments and generally represented by numeral 10. The voice recognition system 10 is depicted within a media device 12. The media device 12 is a vehicle information/entertainment system according to the illustrated embodiment. The voice recognition system 10 includes a motion monitoring device 14 (e.g., a camera) and a voice monitoring device 16 (e.g., a microphone). The voice recognition system 10 also includes a user interface 18 and a controller 20 that communicates with the camera 14, the microphone 16 and the user interface 18. The voice recognition system 10 may also be implemented in other media devices, such as home entertainment systems, cellphones and portable loudspeaker assemblies, as described below with reference to Figure 6.

The voice recognition system 10 monitors a user's features and compares the features to predetermined data to determine if the user is recognized and if an existing profile of the user's interests is available. If the user is recognized, and their profile is available, the system 10 translates the user's speech using filters based on their profile. The system 10 also monitor's the user's movement (e.g., eye gaze and/or lip movement) and filters the user's speech based on such movement. Such filters narrow the search field used to translate the user's speech to text and improve the accuracy of the translation, especially in environments with loud ambient noise, e.g., the passenger compartment of an automobile.

The controller 20 generally includes any number of microprocessors, ASICs, ICs, memory (e.g., FLASH, ROM, RAM, EPROM and/or EEPROM) and software code to co-act with one another to perform operations noted herein. The controller 20 also includes predetermined data, or "look up tables" that are based on calculations and test data and stored within the memory. The controller 20 communicates with other components of the media device 12 (e.g., the camera 14, the microphone 16 and the user interface 18, etc.) over one or more wired or wireless connections using common bus protocols (e.g., CAN and LIN).

Referring to Figures 1-2, the media device 12 receives input that is indicative of a user command. The user interface 18 is a touch screen for receiving tactile input from the user, according to one embodiment. The microphone 16 receives audio input from the user, i.e., a voice command. The camera 14 receives visual input, e.g., movement or gestures from the user that may be indicative of a command. For example, the camera 14 monitors movement of the user's eyes and generates data that is indicative of the user's eye gaze, according to one embodiment. The camera 14 may adjust, e.g. pan, tilt or zoom while monitoring the user. The controller 20 analyzes this eye gaze data using known techniques to determine which region of the user interface 18 that the user is looking at.

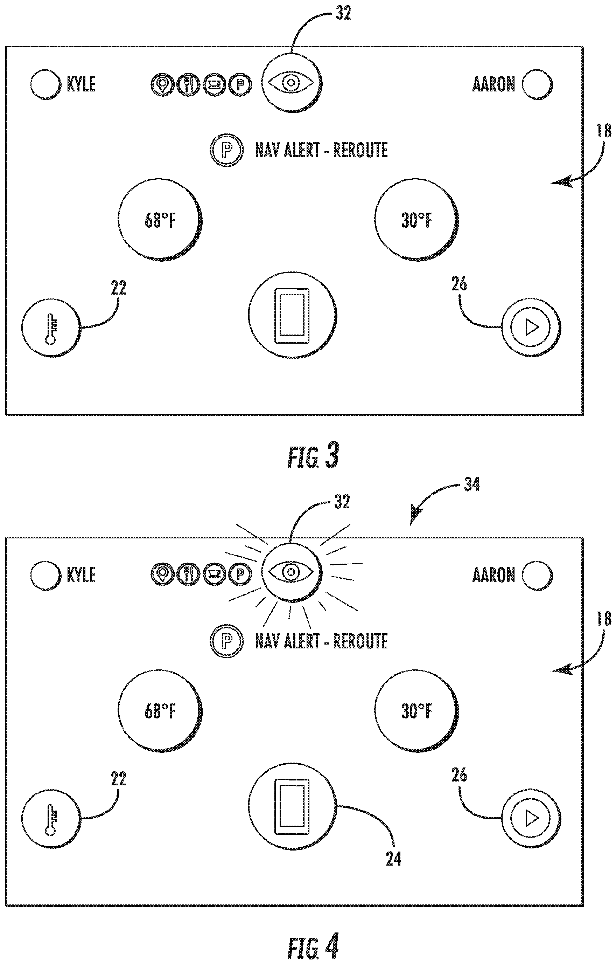

The user interface 18 displays content such as vehicle controls for various vehicle systems. For example, the user interface 18 displays a climate controls icon 22, a communication controls icon 24 and an audio system controls icon 26, according to the illustrated embodiment. The user interface 18 adjusts the content displayed to the user in response to a user tactile (touch) command, voice command or visual command. For example, the voice recognition system 10 controls the user interface 18 to display additional climate controls (shown in Figures 3-4), in response to the user focusing their gaze on the climate controls icon 22 for a period of time. Additionally, the voice recognition system 10 controls the user interface 18 to display additional communication controls (shown in Figure 5), in response to the user saying "Call Anna."

With reference to Figure 2, the voice recognition system 10 controls the user interface 18 to display additional audio system controls, such as available audio content and current audio content, in response to the user pressing the audio system controls icon 26. The user interface 18 displays available audio content 28, which are images of Album Covers A-F by Artists 1-6. The user interface 18 also displays information for a song that is currently being played by the audio system, including text describing the artist and the name of the song along with a scale indicating the current status of the song (i.e., time elapsed and time remaining), which is depicted by numeral 29.

The voice recognition system 10 adjusts the content displayed to the user based on a voice command. For example, rather than pressing the available audio content icon 28 for Artist 2, the user could say "Play Artist 2, Album B, Song 1", and voice recognition system 10 controls the audio system to stop playing the current audio content (i.e., Artist 1, Album A, Song 2) and start playing the new requested audio content. The voice recognition system 10 converts or translates the user's voice command to text, and compares it to predetermined data, e.g., a database of different commands, to interpret the command. However, in some conditions, it may be difficult for the voice recognition system 10 to interpret the command. For example, the user may be driving with the windows open, or there may be other passengers talking in the vehicle, which may create noise which complicates the translation.

The voice recognition system 10 improves the accuracy of the translation of the voice command by combining it with eye gaze tracking to narrow down the search field and limit the speech to text translation to the item on the menu that the user is focused on, according to an embodiment. In one example, the user provides the voice command: "Play Artist 2, Album B, Song 1", while looking at the Artist 2, Album B icon 28. However, other passengers in the vehicle are talking during the command, so the voice recognition system 10 is only able to translate "Play ... Song 1" from the voice command. The voice recognition system 10 determines that the user's eye gaze was focused on the Artist 2, Album B icon 28 and therefore narrows the search field to the correct available audio content.

The voice recognition system 10 improves the accuracy of the translation of the voice request by combining the voice command with facial recognition to narrow down the search field, according to an embodiment. In another example, the available audio content includes a song by the artist: The Beatles^{®} and a song by the artist: Justin Bieber ^{®}. The user provides a voice command: "Play The Beatles^{®}" while looking at the road and not at the user interface 18. However, the windows in the vehicle are open and there is external noise present during the command, so the voice recognition system 10 is only able to translate "Play Be ..." from the voice command. The voice recognition system 10 determines that driver A (Dad) was driving, not driver B (Child), using facial recognition software and is able to narrow the search field to the correct available audio content based on a profile indicative of driver A's audio preferences and/or history.

In another embodiment, the voice recognition system 10 further improves the accuracy of the translation of the voice request by combining the voice command with facial recognition and lip-reading to narrow down the search field. The voice recognition system 10 uses facial recognition to detect face and lip motions and correlates the motion to predetermined facial motion corresponding to the phonics of the speech.

The voice recognition system 10 responds to a user command using audio and/or visual communication, according to an embodiment. After receiving a command to play audio content, the system 10 may ask the user to confirm the command, e.g., "Please confirm, you would like to play Artist 2, Album B, Song 1." Alternatively, or in addition to such audio communication, the voice recognition system 10 may provide visual feedback through dynamic and responsive user interface 18 changes. For example, the voice recognition system may control the available audio content icon 28 for Artist 2, Album B to blink, move, or change size (e.g., shrink or enlarge), as depicted by motion lines 30 in Fig. 2. Such visual feedback reduces false positives, particularly for far field voice recognition, due to unintended voice/movement actions.

With reference to Figures 3-4, additional climate system controls may be displayed on the user interface 18, e.g., in response to a user touching, or focusing their gaze on, the climate system controls icon 22. The voice recognition system 10 uses eye gaze tracking and/or facial recognition as an option to replace a "wake word," according to one or more embodiments. Existing voice recognition systems often require input to wake up, before they start monitoring for voice commands. For example, some existing systems require the user to press a button or say a "wake word," such as "Hi Bixby^{™}," "Hello Alexa^{™}", "Ok, Google^{®}", etc. to initiate audio communication.

The voice recognition system 10 initiates audio communication, (wakes) using eye gaze tracking, according to an embodiment. For example, the system 10 initiates audio communication after determining that the user's eye gaze was focused on the user interface 18 for a predetermined period of time. The voice recognition system 10 may also notify the user once it wakes, using audio or visual communication. In the illustrated embodiment, the user interface 18 includes a wake icon 32 that depicts an open eyeball. After waking, the voice recognition system 10 notifies the user by controlling the wake icon to blink, as depicted by motion lines 34 (shown in Fig. 4). Figure 5 illustrates additional communication system controls that may be displayed on the user interface 18, e.g., in response to a user touching, or focusing their gaze on, the communication controls icon 24.

With reference to Figure 6, a media network is illustrated in accordance with one or more embodiments, and generally represented by numeral 38. The media network 38 includes the voice recognition system 10 in a media device 12 of a vehicle 40 as described above with reference to Figures 1-5. The media network 38 also includes a home entertainment system 42, a cellphone 44 and a portable loudspeaker assembly 46, that each include a voice recognition system 10 and each communicate with each other using a cloud based network 48. A profile may be established for each user of the media device 12 based on their interests as determined from past eye gazing data, voice commands, audio content preferences, etc. This profile may be stored within the cloud network 48, so that it is accessible by the other devices of the media network 38.

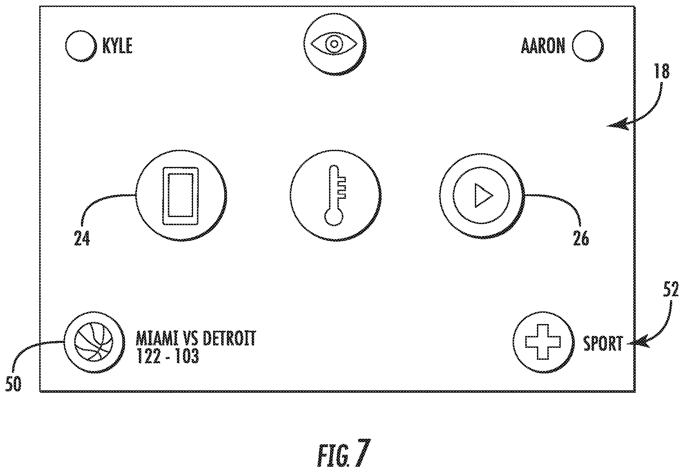

Referring to Figure 7, the voice recognition system 10 includes gaze-enabled macros according to an embodiment. The controller 20 includes instructions that once executed, execute the macro(s). Such macros provide shortcuts to groups of commands or actions that can be initiated with a single voice command or utterance combined with eye gaze tracking. The commands can include actions related to embedded systems domains, offboard or cloud related actions or a combination of these. For example, the voice recognition system 10 implemented in the vehicle 40 may turn the headlights on, wipers on, and request local weather forecasts and weather alerts in response to receiving a "Bad Weather" voice command combined with an eye gaze focusing on a weather icon (not shown). The vehicle based voice recognition system 10 may also tune the radio to a personalized sports game and display the current score, as depicted by sports score icon 50, in response to receiving a "Sports" voice command, combined with an eye gaze focusing on a text icon "Sport" 52.

Similarly, the voice recognition system 10 implemented in the home entertainment system 42 may provide personalized sports scores and news, turn on the surround sound, and specific optical settings for the television, in response to a "Sports" voice command combined with an eye gaze focusing on a sports icon (not shown). Additionally, the voice recognition system 10 implemented in the cellphone 44 may set a home security system, check interior lights, thermostat settings and door locks in response to a "Sleep" voice command, combined with an eye gaze focusing on a sleep icon (not shown).

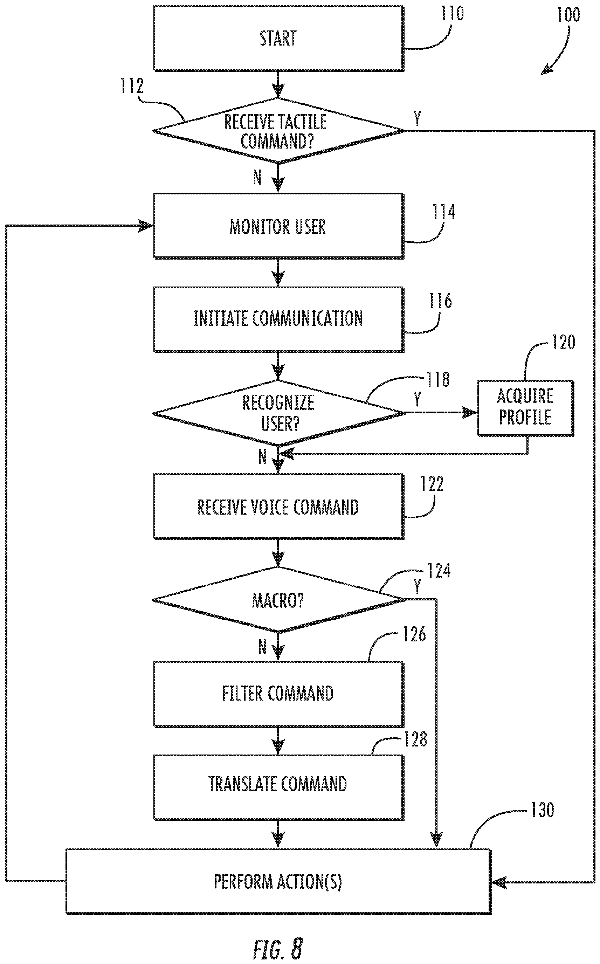

With reference to Figure 8, a flow chart depicting a method for controlling the voice recognition system 10 is illustrated in accordance with one or more embodiments and is generally referenced by numeral 100. The method 100 is implemented using software code that is executed by the controller 20 and contained within memory according to one or more embodiments. While the flowchart is illustrated with a number of sequential steps, one or more steps may be omitted and/or executed in another manner without deviating from the scope and contemplation of the present disclosure.

At operation 110, the voice recognition system 10 (shown in Fig. 1) starts or initiates the method 100. In one embodiment, the voice recognition system 10 starts in response to the user performing an action that triggers power to be supplied to the system, e.g., by turning an ignition key to on, and the user interface 18 displays vehicles controls, such as those shown in Figs. 2-5, and 7. At operation 112, in response to receiving a tactile command, the voice recognition system 10 proceeds to operation 130 and performs a corresponding action. For example, if the user touches the climate controls icon 22, the user interface 18 displays the additional climate controls icons as shown in Figures 3 and 4. At operation 114, the voice recognition system 10 monitors the user, e.g., using a camera 14 and/or microphone 16 (shown in Figure 1).

The voice recognition system initiates audio communication with the user (i.e., wakes) at operation 116. This initiation is in response to a voice command (e.g., "wake word") or in response to a visual command, e.g., a determination that the user's eye gaze was focused on the user interface 18 for longer than a predetermined period of time, according to one or more embodiments. As discussed with reference to Figure 4, the voice recognition system 10 may also notify the user once it wakes using audio or visual communication, e.g., by controlling the wake icon 32 to blink.

At operation 118, the voice recognition system 10 continues to monitor a user's features and compares the features to predetermined data to determine if the user is recognized. If the user is recognized, the voice recognition system 10 acquires their profile at operation 120, e.g., through the cloud based network 38 (shown in Figure 6).

The voice recognition system 10 receives a voice command at operation 122. Then at operation 124, the voice recognition system 10 determines if the voice command, combined with a non-verbal command, e.g., eye-gaze, corresponds to a macro. If so, the system 10 proceeds to operation 130 and performs the action(s).

If the voice command does not correspond to a macro, then the voice recognition system 10 filters the user's speech. If a profile was acquired at operation 120, the system 10 filters the voice command at operation 126 based on the profile. The system 10 also monitor's the user's movement (e.g., eye gaze and/or lip movement) and filters the voice command based on such movement. Such filters narrow the search field used to translate the voice command to text and improve the accuracy of the translation. The voice recognition system 10 translates the voice command at operation 128 and then performs the action or actions (e.g., adjust content displayed on the user interface 18; control the climate system to increase the temperature within the vehicle; or control the audio system to play a different song) at operation 130.

While exemplary embodiments are described above, it is not intended that these embodiments describe all possible forms of the invention. Rather, the words used in the specification are words of description rather than limitation, and it is understood that various changes may be made without departing from the scope of the invention.

## Claims

1. A voice recognition system (10) comprising:
a user interface (18) to display content;
a camera (14) to provide a first signal indicative of an image of a user viewing the content;
a microphone (16) to provide a second signal indicative of a voice command that corresponds to a requested action; and
a controller (20) programmed to:
receive the first signal and the second signal,
filter the voice command based on the image,
perform the requested action based on the filtered voice command, and
perform a macro including a series of actions in response to:
an eye gaze of the user is detected to focus on a region of the user interface (18) for a time period that exceeds a predetermined period of time; and
the voice command corresponding to a predetermined voice command that is associated with the content displayed on the region of the user interface (18).

2. The voice recognition system (10) of claim 1 wherein the controller (20) is further programmed to narrow a search field for translating the voice command into text when filtering the voice command based on the image.

3. The voice recognition system (10) of claim 1, wherein the controller (20) is further programmed to filter the voice command in response to changes in the image that correspond to motion.

4. The voice recognition system (10) of claim 1, wherein the controller (20) is further programmed to filter the voice command in response to the image indicating at least one of an eye gaze and a lip movement of the user.

5. The voice recognition system (10) of claim 1, wherein the controller (20) is further programmed to filter the voice command corresponding to content displayed on a region of the user interface (18) when an eye gaze of the user is detected to focus on the region of the user interface (18) for a time period that exceeds a predetermined period of time.

6. The voice recognition system (10) of claim 5 wherein the controller (20) is further programmed to adjust the content displayed on the region of the user interface (18) to confirm at least one of the first signal and the second signal prior to performing the action.

7. The voice recognition system (10) of claim 1 wherein the controller (20) is further programmed to perform the requested action by adjusting the content displayed on the user interface (18).

8. The voice recognition system (10) of claim 1 wherein the controller (20) is further programmed to compare the image to predetermined profile data to select a profile associated with the user and to filter the voice command based on the profile.

9. The voice recognition system (10) of claim 1, wherein the controller (20) is further programmed to initiate communication with the user in response to an eye gaze of the user is detected to focus on a region of the user interface (18) for a time period that exceeds a predetermined period of time.

10. The voice recognition system (10) of claim 9 wherein the controller (20) is further programmed to adjust content displayed on the user interface (18) to confirm initiation of communication.

11. A media network (38) comprising:
a first media device (12) including the voice recognition system (10) of claim 1, wherein the user interface (18) comprises a first user interface;
a second media device including a second user interface adapted to display content and a second controller (20) in communication with the second user interface; and
a storage device in communication with the controller (20) and the second controller (20) and adapted to store a user profile.

## Patentansprüche

1. Spracherkennungssystem (10), umfassend:
eine Benutzerschnittstelle (18), um Inhalt anzuzeigen;
eine Kamera (14), um ein erstes Signal bereitzustellen, das ein Bild eines Benutzers angibt, der den Inhalt betrachtet;
ein Mikrofon (16), um ein zweites Signal bereitzustellen, das einen Sprachbefehl angibt, der einer angeforderten Handlung entspricht; und
eine Steuerung (20), die zu Folgendem programmiert ist:
Empfangen des erste Signals und des zweiten Signals,
Filtern des Sprachbefehls basierend auf dem Bild,
Durchführen der angeforderten Handlung basierend auf dem gefilterten Sprachbefehl und
Ausführen eines Makros, das eine Reihe von Handlungen beinhaltet, als Reaktion auf Folgendes:
es wird erfasst, dass sich ein Blick des Benutzers auf einen Bereich der Benutzerschnittstelle (18) für eine Zeitdauer fokussiert, die eine vorbestimmte Zeitdauer überschreitet; und
der Sprachbefehl entspricht einem vorbestimmten Sprachbefehl, der dem auf dem Bereich der Benutzerschnittstelle (18) angezeigten Inhalt zugeordnet ist.

2. Spracherkennungssystem (10) nach Anspruch 1, wobei die Steuerung (20) ferner dazu programmiert ist, ein Suchfeld zum Übersetzen des Sprachbefehls in Text einzuengen, wenn der Sprachbefehl basierend auf dem Bild gefiltert wird.

3. Spracherkennungssystem (10) nach Anspruch 1, wobei die Steuerung (20) ferner dazu programmiert ist, den Sprachbefehl als Reaktion auf Änderungen in dem Bild, die einer Bewegung entsprechen, zu filtern.

4. Spracherkennungssystem (10) nach Anspruch 1, wobei die Steuerung (20) ferner dazu programmiert ist, den Sprachbefehl als Reaktion darauf zu filtern, dass das Bild mindestens eines von einem Blick und einer Lippenbewegung des Benutzers angibt.

5. Spracherkennungssystem (10) nach Anspruch 1, wobei die Steuerung (20) ferner dazu programmiert ist, den Sprachbefehl entsprechend einem Inhalt zu filtern, der auf einem Bereich der Benutzerschnittstelle (18) angezeigt wird, wenn erfasst wird, dass sich ein Blick des Benutzers auf den Bereich der Benutzerschnittstelle (18) für eine Zeitdauer fokussiert, die eine vorbestimmte Zeitdauer überschreitet.

6. Spracherkennungssystem (10) nach Anspruch 5, wobei die Steuerung (20) ferner dazu programmiert ist, den auf dem Bereich der Benutzerschnittstelle (18) angezeigten Inhalt anzupassen, um mindestens eines von dem ersten Signal und dem zweiten Signal zu bestätigen, bevor die Handlung durchgeführt wird.

7. Spracherkennungssystem (10) nach Anspruch 1, wobei die Steuerung (20) ferner dazu programmiert ist, die angeforderte Handlung durch Anpassen des auf der Benutzerschnittstelle (18) angezeigten Inhalts durchzuführen.

8. Spracherkennungssystem (10) nach Anspruch 1, wobei die Steuerung (20) ferner dazu programmiert ist, das Bild mit vorbestimmten Profildaten zu vergleichen, um ein dem Benutzer zugeordnetes Profil auszuwählen und den Sprachbefehl basierend auf dem Profil zu filtern.

9. Spracherkennungssystem (10) nach Anspruch 1, wobei die Steuerung (20) ferner dazu programmiert ist, eine Kommunikation mit dem Benutzer als Reaktion darauf einzuleiten, dass erfasst wird, dass sich ein Blick des Benutzers auf einen Bereich der Benutzerschnittstelle (18) für eine Zeitdauer fokussiert, die einen vorbestimmten Zeitraum überschreitet.

10. Spracherkennungssystem (10) nach Anspruch 9, wobei die Steuerung (20) ferner dazu programmiert ist, den auf der Benutzerschnittstelle (18) angezeigten Inhalt anzupassen, um die Einleitung einer Kommunikation zu bestätigen.

11. Mediennetzwerk (38), umfassend:
eine erste Medienvorrichtung (12), die das Spracherkennungssystem (10) nach Anspruch 1 beinhaltet, wobei die Benutzerschnittstelle (18) eine erste Benutzerschnittstelle umfasst;
eine zweite Medienvorrichtung, die eine zweite Benutzerschnittstelle, die ausgelegt ist, um Inhalt anzuzeigen, und eine zweite Steuerung (20) in Kommunikation mit der zweiten Benutzerschnittstelle beinhaltet; und
eine Speichervorrichtung, die mit der Steuerung (20) und der zweiten Steuerung (20) in Kommunikation steht und ausgelegt ist, um ein Benutzerprofil zu speichern.

## Revendications

1. Système de reconnaissance vocale (10) comprenant :
une interface utilisateur (18) pour afficher du contenu ;
une caméra (14) pour fournir un premier signal indicatif d'une image d'un utilisateur visualisant le contenu ;
un microphone (16) pour fournir un second signal indicatif d'une commande vocale qui correspond à une action demandée ; et
un dispositif de commande (20) programmé pour :
recevoir le premier signal et le second signal,
filtrer la commande vocale en fonction de l'image,
effectuer l'action demandée en fonction de la commande vocale filtrée, et
exécuter une macro comportant une série d'actions en réponse à :
un regard de l'utilisateur détecté pour se concentrer sur une région de l'interface utilisateur (18) pendant une période de temps qui dépasse une période de temps prédéterminée ; et
la commande vocale correspondant à une commande vocale prédéterminée qui est associée au contenu affiché sur la région de l'interface utilisateur (18).

2. Système de reconnaissance vocale (10) selon la revendication 1, dans lequel le dispositif de commande (20) est en outre programmé pour réduire un champ de recherche pour traduire la commande vocale en texte lors du filtrage de la commande vocale en fonction de l'image.

3. Système de reconnaissance vocale (10) selon la revendication 1, dans lequel le dispositif de commande (20) est en outre programmé pour filtrer la commande vocale en réponse à des changements dans l'image qui correspondent à un mouvement.

4. Système de reconnaissance vocale (10) selon la revendication 1, dans lequel le dispositif de commande (20) est en outre programmé pour filtrer la commande vocale en réponse à l'image indiquant au moins l'un parmi un regard et un mouvement des lèvres de l'utilisateur.

5. Système de reconnaissance vocale (10) selon la revendication 1, dans lequel le dispositif de commande (20) est en outre programmé pour filtrer la commande vocale correspondant au contenu affiché sur une région de l'interface utilisateur (18) lorsqu'un regard de l'utilisateur est détecté pour se concentrer sur la région de l'interface utilisateur (18) pendant une période de temps qui dépasse une période de temps prédéterminée.

6. Système de reconnaissance vocale (10) selon la revendication 5, dans lequel le dispositif de commande (20) est en outre programmé pour ajuster le contenu affiché sur la région de l'interface utilisateur (18) pour confirmer au moins l'un parmi le premier signal et le second signal avant d'effectuer l'action.

7. Système de reconnaissance vocale (10) selon la revendication 1, dans lequel le dispositif de commande (20) est en outre programmé pour effectuer l'action demandée en ajustant le contenu affiché sur l'interface utilisateur (18).

8. Système de reconnaissance vocale (10) selon la revendication 1, dans lequel le dispositif de commande (20) est en outre programmé pour comparer l'image à des données de profil prédéterminées pour sélectionner un profil associé à l'utilisateur et pour filtrer la commande vocale en fonction du profil.

9. Système de reconnaissance vocale (10) selon la revendication 1, dans lequel le dispositif de commande (20) est en outre programmé pour initier une communication avec l'utilisateur en réponse à un regard de l'utilisateur détecté pour se concentrer sur une région de l'interface utilisateur (18) pendant une période de temps qui dépasse une période de temps prédéterminée.

10. Système de reconnaissance vocale (10) selon la revendication 9, dans lequel le dispositif de commande (20) est en outre programmé pour ajuster le contenu affiché sur l'interface utilisateur (18) pour confirmer l'initiation de la communication.

11. Réseau multimédia (38) comprenant :
un premier dispositif multimédia (12) comportant le système de reconnaissance vocale (10) selon la revendication 1, dans lequel l'interface utilisateur (18) comprend une première interface utilisateur ;
un second dispositif multimédia comportant une seconde interface utilisateur adaptée pour afficher du contenu et un second dispositif de commande (20) en communication avec la seconde interface utilisateur ; et
un dispositif de stockage en communication avec le dispositif de commande (20) et le second dispositif de commande (20) et adapté pour stocker un profil d'utilisateur.
